# EUROPÄISCHE PATENTSCHRIFT

(11) **EP 0 518 130 B1**
(45) Veröffentlichungstag und Bekanntmachung des Hinweises auf die Patenterteilung: **21.02.1996**
(21) Anmeldenummer: 92108927.2
(22) Anmeldetag: 27.05.1992
(51) Int. Cl.: B60N 2/22

(54) **Fahrzeugsitz mit Sitztiefen- und Rückenlehnenverstellung**
Vehicle seat with seat height and backrest adjustment
Siège de véhicule à ajustement en hauteur du siège et du dossier

(30) Priorität: 31.05.1991 DE 4117785; 19.06.1991 DE 4120121
(43) Veröffentlichungstag der Anmeldung: 16.12.1992
(73) Patentinhaber: C. Rob. Hammerstein GmbH, D-42699 Solingen (DE)
(72) Erfinder: Bauer, Heinz, W-5650 Solingen 11 (DE); Becker, Burckhard, W-5650 Solingen 11 (DE); Frohnhaus, Ernst-Reiner, W-5650 Solingen 11 (DE); Leng, Michael, W-5650 Solingen 11 (DE)
(74) Vertreter: Bauer, Wulf, Dr.

(56) Entgegenhaltungen:
- EP-A- 0 022 691
- EP-A- 0 205 409
- EP-A- 0 211 248
- EP-A- 0 248 773
- EP-A- 0 265 747
- DE-A- 2 024 417
- DE-A- 3 608 828
- DE-U- 8 900 349
- GB-A- 2 207 861
- US-A- 2 082 297

## Beschreibung

Die Erfindung bezieht sich auf einen Fahrzeugsitz mit einem Sitzteil, mit einer Rückenlehne, die an einem Sitzträger des Sitzteils befestigt ist, und mit einer Vorrichtung zur Veränderung der nutzbaren Sitzfläche des Sitzteils, wobei zur Längsverschiebung der Rückenlehne gegenüber dem Sitzteil an beiden Sitzseiten jeweils eine Verstellvorrichtung zwischen Sitzträger und einem Lagerteil der Rückenlehne angeordnet ist, der ein Verstellantrieb zugeordnet ist.

Bei diesem Fahrzeugsitz (DE-A-36 08 828 und darin genannte Entgegenhaltungen) ist zwischen Rückenlehne und Sitzträger eine Schienenführung vorgesehen, ähnlich wie sie für die Längsverstellung eines Fahrzeugsitzes gegenüber der Bodengruppe benutzt wird. Bei der Ausführung nach der genannten DE-A-36 08 828 verlaufen die Schienen geradlinig. Aus der GB-A-323 296 ist eine steckbare und verschraubbare Verstellvorrichtung mit allerdings nur einer Schiene vorbekannt, bei der der Schienenverlauf gekrümmt ist. Bei diesen vorbekannten Fahrzeugsitzen wird jedoch im wesentlichen die Tiefe der Sitzfläche durch die Verstellvorrichtung geändert. Die Oberkante der Rückenlehne wird zwangsläufig parallel zur Schienenrichtung verstellt. Da bei den vorbekannten Fahrzeugsitzen der Verlauf der Verstellschienen (in normaler Sitzposition betrachtet) nach hinten, unten geneigt ist, bewegt sich die Oberkante der Rückenlehne nach hinten unten, wenn die Tiefe der Sitzfläche vergrößert wird.

Bei den vorbekannten Fahrzeugsitze erfolgt also jeweils eine unerwünschte Verstellung der Rückenlehne nach hinten, wenn die Tiefe der Sitzfläche vergrößert wird. Dies ist nachteilig. Nur durch Synchronisation der Verstellantriebe für die Rückenlehnenneigung und die Tiefe der Sitzfläche läßt sich eine Veränderung der Tiefe der Sitzfläche ohne ungewollte Änderung der Neigung der Rückenlehne erreichen. Eine derartige Anordnung ist allerdings aufwendig.

Aus der EP-A-0 248 773 ist ein Fahrzeugsitz bekannt, bei dem die Rückenlehne über zwei im wesentlichen parallele Arme mit einem Lagerbockgelenk verbunden ist, der auf dem Fahrzeugboden befestigt ist. Am hinteren der beiden parallelen Arme ist der Sitzträger angelenkt. Bei diesem vorbekannten Fahrzeugsitz ist nur eine kombinierte Verstellung erreichbar, nämlich eine gleichzeitige Längsverstellung, Sitztiefeneinstellung und Veränderung der Neigung der Rückenlehne. Eine Höhenverstellvorrichtung für den Sitzträger gegenüber dem Fahrzeugboden ist nicht einsetzbar.

Die DE-U-89 00 349 lehrt einen Fahrzeugsitz mit einem einseitigen Verstellantrieb, dem eine Drehübertragung angeordnet ist.

Ausgehend von dem Fahrzeugsitz der eingangs genannten Art liegt der Erfindung die Aufgabe zugrunde, diesen so weiterzubilden, daß er konstruktiv einfacher aufgebaut ist, nur einen Verstellantrieb benötigt und eine kinematisch bessere Anpassung an die Erfordernisse eines Benutzers ermöglicht.

Gelöst wird diese Aufgabe durch die Merkmale des Patentanspruchs 1.

Erfindungsgemäß ist der Lagerteil der Rückenlehne über ein Gelenkvieleck mit dem Sitzträger des Sitzteils gelenkverbunden. Dieses Gelenkvieleck ist zumindest ein Gelenkdreieck, in einer bevorzugten Ausführung ist es ein Gelenkviereck (insbesondere Parallelogramm), in einer Weiterbildung ein Gelenkfünfeck. In jedem Fall verbindet der Gelenkarm unmittelbar den Lagerteil mit dem Sitzträger unter Ausbildung eines Lagerteilgelenks und eines Sitzträgergelenks. Je eines dieser Gelenke, beispielsweise und bevorzugt das Sitzträgergelenk, ist durch eine Querverbindung so mit dem gleichen Gelenks der anderen Sitzseite verbunden, daß die beiden Gelenkarme der beiden Sitzseiten stets eine gleiche Einstellung aufweisen. Dadurch wird nur an einer Sitzseite ein Verstellantrieb benötigt. Er ist vorzugsweise an der fahrzeugaußenseitigen Sitzseite vorgesehen, also an der Sitzseite, an der sich das Gurtschloß nicht befindet.

Der Gelenkarm bestimmt im wesentlichen die Kinematik der Bewegung zwischen Rückenlehne und Sitzträger. Die Verbindung zwischen Haltebereich des Lagerteiles und Sitzträger dient im wesentlichen zur Fixierung, durch sie wird praktisch das zweite Gelenk (Lagerteilgelenk oder Sitzträgergelenk) des Gelenkarms arretiert, ohne daß es eines aufwendigen Zahnradgetriebes oder dergleichen zwischen diesen beiden Gelenken bedürfte. Die erreichte Fixierung ist dabei ausreichend unfallfest, ohne hohen Materialaufwand zu erfordern.

Erfindungsgemäß ist es vorteilhaft, daß die Kinematik der Bewegung der Rückenlehne gegenüber dem Sitzträger wesentlich universeller gewählt werden kann als bei den Fahrzeugsitzen nach dem genannten Stand der Technik. Durch Wahl der Länge des Gelenkarms, also des Abstandes seines Lagerteilgelenks vom Sitzträgergelenk und Wahl der Relativpositionen dieser Gelenke entlang des Verstellwegs zueinander werden Fahrzeugsitze erreicht, bei denen beispielsweise die Vergrößerung der Sitztiefe einhergeht mit einem Anheben der Oberkante der Rückenlehne. Dies entspricht den ergonomischen Erfordernissen, da ein großer Mensch, der also eine große Sitztiefe benötigt, zumeist auch einen längeren Rücken hat als ein kleinerer Mensch. Bei einem größeren Menschen wird auch eine gegenüber der Sitzfläche höhere Lordosenunterstützung gewünscht als bei einem kleineren Menschen.

In einer vorteilhaften Weiterbildung ist die Verstellvorrichtung so ausgeführt, daß sich bei ihrer Verstellung die Neigung der Rückenlehne ändert. Hierfür kann entweder die erfindungsgemäße Anordnung so weitergebildet, insbesondere mit einer weiteren Einstellvorrichtung versehen werden, daß über sie die Neigungsverstellung der Rückenlehne erfolgt, oder die Kinematik ist so gewählt, daß mit dem nur einen Verstellantrieb bei einer Verstellung der Sitztiefe und zwangsläufig damit verbundenen Verstellung der Höhe der Oberkante der Rückenlehne auch zugleich eine Neigungsverstellung der Rückenlehne erfolgt. Bei dieser Ausführung ist zusätzlich eine an sich bekannte, separate Rückenlehnenneigungsverstellung vorteilhaft.

Ist der Haltebereich unmittelbar in einer Kulissenführung des Sitzträgers geführt, wird ein Gelenkdreieck ausgebildet. Wenn am Haltebereich eine Schwinge angelenkt ist, wird entweder ein Gelenkviereck oder ein Gelenkfünfeck erhalten, je nachdem, ob die Schwinge unmittelbar an dem Sitzträger angelenkt ist, oder hier noch eine Koppelschwinge zwischengeschaltet ist. In allen Fällen wird bei kompakter Bauweise eine sichere Verbindung zwischen Rückenlehne und Sitzträger erhalten, die den ergonomischen Anforderungen entsprechend ausgebildet werden kann. Dabei wird eine ausreichend leichtgewichtige Bauweise, einhergehend mit einer wirtschaftlich günstigen Ausführung, erreicht.

Vorzugsweise wirkt der nur eine Verstellantrieb auf das Sitzträgergelenk des Gelenkarms und legt dieses fest. Der Verstellantrieb ist dabei dem Gelenkarm zugeordnet und stützt sich seinerseits am Sitzträger ab. Dadurch bleibt sein Antrieb ortsfest gegenüber dem Sitzträger, was sowohl bei einem motorischen, als auch bei einem handbetätigten Antrieb jeweils Vorteile bietet.

Der Abstand zwischen Lagerteilgelenk und Haltebereich wird möglichst groß gewählt, auf diese Weise wird eine sichere Verbindung der Rückenlehne mit dem Sitzträger erzielt, zudem machen sich Toleranzen in den einzelnen Teilen umso weniger bemerkbar und tritt ein Spiel umso weniger auf, je größer der Abstand (Versatz) gewählt ist. Der Versatz verläuft vorzugsweise parallel zur Sitzfläche.

Vorzugsweise befindet sich (in normaler Sitzposition betrachtet) das Lagerteilgelenk hinter dem Haltebereich, anders ausgedrückt ist der Gelenkarm hinter der Schwinge bzw. dem kulissengeführten Teil des Haltebereichs. Es ist vorteilhaft, den Gelenkarm möglichst weit hinten anzuordnen. Für die anderen Teile steht davor ausreichend Platz zur Verfügung, der sonst nicht anderweitig beansprucht wird. Insgesamt befinden sich dadurch alle Teile der Verstellvorrichtung einschließlich des Verstellantriebs seitlich des Sitzes. Schließlich ist es in einer bevorzugten Ausbildung möglich, daß das Lagerteilgelenk gleichachsig ist mit dem Gelenk einer Neigungsverstellvorrichtung für die Rückenlehne, hierdurch werden Bauteile eingespart.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
- Fig. 1: eine perspektivische Teildarstellung der fahrzeugaußenseitigen Sitzseite eines Fahrzeugsitzes, mit angedeuteten Sitz- und Rückenlehnenkonturen (strichpunktiert),
- Fig. 2: eine zu Figur 1 passende, perspektivische Darstellung der fahrzeugmittenseitigen Seite des in Figur 1 teilweise dargestellten Fahrzeugsitzes und
- Fig. 3: eine prinzipielle Darstellung der erfindungsgemäßen Teile eines Fahrzeugsitzes mit einer Kulissenführung eines vorderen Haltebereichs eines Lagerteiles.

In den Figuren ist jeweils nur der hintere, untere Teil eines Fahrzeugsitzes, nämlich im Verbindungsbereich zwischen einem Sitzträger 20 und einer Rückenlehne 22, gezeigt. Der Sitzträger 20 ist Bestandteil eines Sitzteils, der hier nicht näher dargestellt ist, da er bekannt ist, zu ihm gehört beispielsweise noch ein Sitzkissen etc.. Der Sitzträger 20 selbst ist in geeigneter Weise mit einer Längsführung, die sich unterhalb von ihm befindet, verbunden, beispielsweise über eine Verstellvorrichtung, wie sie aus der DE-A-40 07 490 bekannt ist.

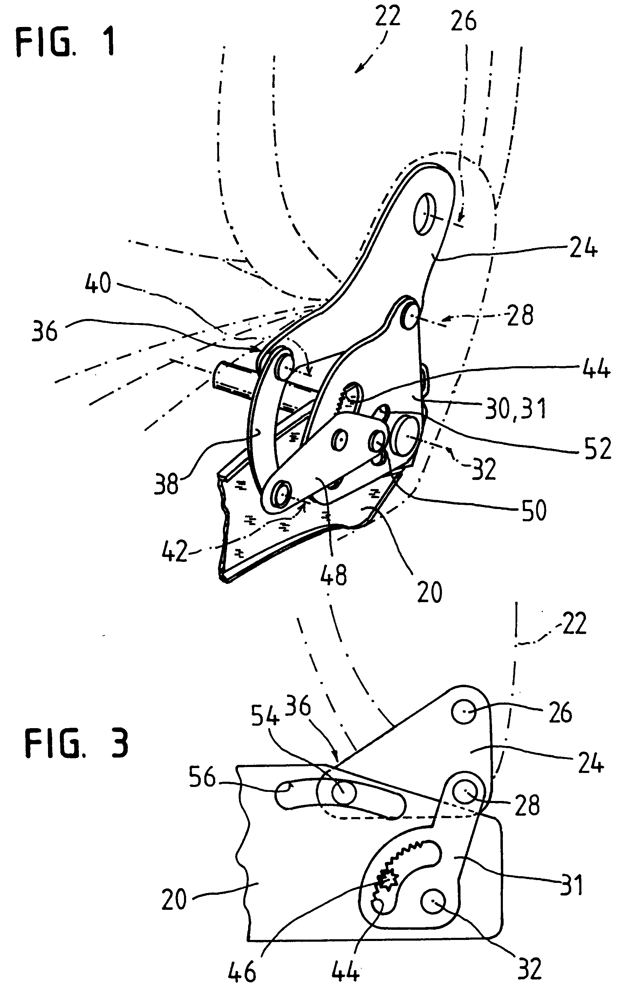

Die Rückenlehne 22, die in Fig.1 nur strichpunktiert angedeutet ist, endet unten beidseitig jeweils in einem im wesentlichen L-förmigen Lagerteil 24, dessen unterer L-Schenkel nach vorn (in normaler Sitzposition gesehen) vorsteht. Oben ist der Lagerteil 24 mit einer Neigungsverstellvorrichtung für die Rückenlehne verbunden, sie ist an sich bekannt und hier nicht dargestellt, die Verstellbewegung erfolgt um eine Schwenkachse 26. Im wesentlichen unterhalb dieser Schwenkachse 26 befindet sich ein Lagerteilgelenk 28, hier ist ein Gelenkarm 30 angelenkt, der in seinem unteren Endbereich am Sitzträger 20 angelenkt ist, nämlich in einem Sitzträgergelenk 32. Während das Lagerteilgelenk 28 durch einen kurzen Achsstummel ausgebildet ist, verläuft auf der Achse jedes Sitzträgergelenks 32 der beiden Sitzseiten eine starre, rohrförmige Querverbindung 34, die die beiden Sitzseiten miteinander drehstarr verbindet, wie im folgenden noch beschrieben wird. Durch sie ist sichergestellt, daß die beiden Gelenkarme 30 der beiden Sitzseiten miteinander starr bewegungsverbunden sind, also stets gleiche Winkelpositionen zum Sitzträger 20 einnehmen.

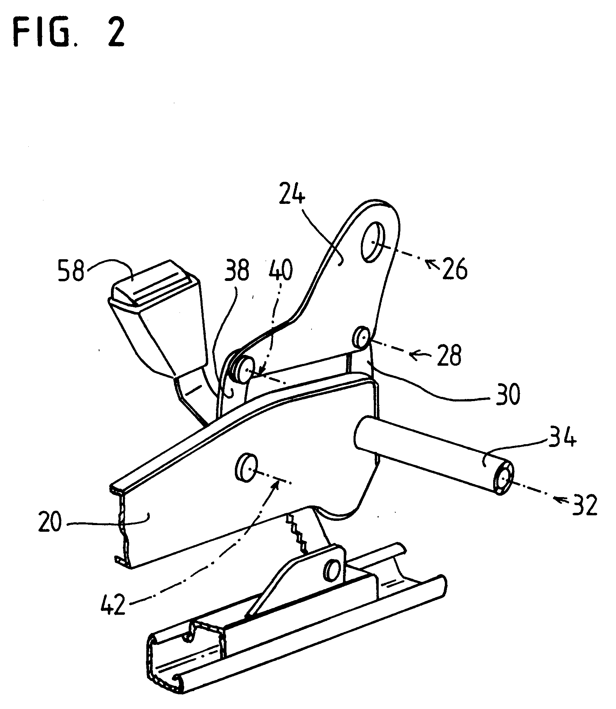

An seinem vorderseitigen Ende des unteren Schenkels bildet der Lagerteil 24 einen Haltebereich 36 aus, der in normaler Sitzrichtung gegenüber dem Lagerteilgelenk 28 versetzt ist, der Versatz beträgt ca. fünfzig Millimeter. Im gezeigten Ausführungsbeispiel der Figuren 1 und 2 ist der Haltebereich als freies Gelenk ausgeführt, hier ist eine Schwinge 38 angelenkt, die zugehörige Achse ist mit 40 bezeichnet. Das untere Ende der Schwinge 38 ist um eine Achse 42 schwenkbar am Sitzträger 20 frei angelenkt. Insgesamt wird somit ein Gelenkviereck ausgebildet. Seine vier Gelenkachsen 28, 32, 40 und 42, die notwendigerweise zueinander parallel verlaufen, stehen im wesentlichen auf den Eckpunkten eines Parallelogramms.

Auf jeder Sitzseite ist ein derartiges Gelenkviereck angeordnet, die beiden Gelenkvierecke der beiden Sitzseiten sind kongruent. Zur Arretierung dieser beiden Gelenkvierecke ist ein und nur ein Verstellantrieb vorgesehen, er befindet sich auf der fahrzeugaußenseitigen Sitzseite, wodurch im Ausführungsbeispiel nach den Fig. 1 und 2 an dieser Seite der Schwenkarm 30 auch eine andere, kompliziertere Form hat als an der Fahrzeugmitte, die aus Figur 2 ersichtlich ist. In Figur 2 ist der Gelenkarm 30 ein längliches, schmales Teil, das im wesentlichen durch zueinander parallel verlaufende, gerade Linien begrenzt ist. Auf der fahrzeugaußenseitigen Seite dagegen (Figur 1) ist der Gelenkarm 30 ein im wesentlichen kreissektorförmiges Teil, das im folgenden näher beschrieben wird:

Durch den Verstellantrieb wird die Winkelstellung des Gelenkarms 30 um das Sitzträgergelenk 32 vorgegeben. Hierzu hat der fahrzeugaußenseitige Gelenkarm, der im folgenden als Gelenkarm 31 bezeichnet wird, eine bogenförmige Verzahnung 44, die zentrisch zur Achse des Sitzträgergelenks 32 verläuft und in einen ebenfalls bogenförmigen Ausschnitt im Gelenkarm 31 hineinragt. Aufgrund dieses Ausschnittes ist die Verzahnung 44 in beiden Endbereichen mechanisch begrenzt. Mit der Verzahnung 44 ist ein (nicht sichtbares, siehe aber Fig. 3) Ritzel in Eingriff, das um eine Welle 46 drehbar ist. Sie ist in geeigneter Weise, beispielsweise durch einen Elektromotor, einen Handantrieb usw. drehbar, verwiesen wird auf entsprechende Anordnungen gemäß der DE-A-36 16 164, 37 29 134, 32 27 222 und DE-U-90 03 215, deren Inhalt jeweils zum Bestand der vorliegenden Offenbarung gehört. Die Welle 46 ist einerseits im Sitzträger 20 und andererseits an einem Stützteil 48 gelagert, das mit dem Sitzträger 20 starr verbunden ist. Die Verbindung erfolgt einerseits über die Achse 42 und andererseits über einen Bolzen 50, er greift in eine zweite, konzentrische und teilkreisbogenförmige Ausnehmung 52 des Gelenkarms 31, so daß auch hierdurch, in gleicher Weise wie oben beschrieben, der Schwenkwinkel des Gelenkarms 31 in zwei Richtungen vorgegeben und begrenzt ist. Wie Fig. 1 zeigt, befindet sich der Gelenkarm 31 zwischen dem Sitzträger 20 und dem an dessen Außenseite angeordneten Stützteil 48, wodurch der Eingriff zwischen dem Ritzel und der Verzahnung 44 gesichert ist.

Bei einer Drehung des Ritzels wandert das Lagerteilgelenk 28 auf einem Kreisbogen um das Sitzträgergelenk 32, wodurch einerseits die Tiefe der Sitzfläche des Fahrzeugsitzes verändert wird, andererseits die Rückenlehne 22 nach oben oder unten bewegt wird. Gleichzeitig bewegt sich die Achse 40 um einen Kreisbogen um die Achse 42. Durch Ändern der Gelenkabstände des erfindungsgemäßen Gelenkvierecks lassen sich andere Bewegungsabläufe erhalten.

Da der Gelenkarm 31 starr über die Querverbindung 34 mit dem einfachen Gelenkarm 30 verbunden ist, finden auf der fahrzeugmittigen Seite des Fahrzeugsitzes identische Verstellvorgänge statt. Aufgrund der starren Verbindung ist dort ein Verstellantrieb nicht notwendig. Neben der bereits erwähnten einfacheren Ausbildung des Gelenkarms 30, der keine Verzahnung 44 und auch keine Ausnehmung 42 aufweist, entfällt dort auch ein Stützteil 48.

Wie die Fig. 1 und 2 zeigen, befinden sich alle Teile der erfindungsgemäßen Verstellvorrichtung seitlich des Sitzes, insbesondere steht kein Teil nach rückwärts vor.

Im Ausführungsbeispiel nach Fig. 3 ist der vorn gelegene Haltebereich 36 des Lagerteiles 24 gelenkig mit einem Kulissenteil 54 verbunden, das als Achsstummel ausgebildet und in einer gekrümmt verlaufenden Kulissenführung des Sitzträgers 20 geführt ist. Die Führung hat beidendig mechanische Anschläge, da die Kulissenführung 56 ein Langloch ist. Wiederum ist das Sitzträgergelenk 32 jeder Sitzseite durch eine starre Querverbindung 34 in Form eines Rohres drehstarr verbunden. Zur Einstellung der Winkelposition des Gelenkarms 31 und damit des Gelenkarms 30 ist wiederum am Gelenkarm 30 eine Verzahnung 44 vorgesehen, in die ein Ritzel eingreift.

Aus Fig. 2 ist noch ersichtlich, daß an der Achse 42 der gezeigten fahrzeugmittigen Seite ein Gurtschloß 58 angelenkt ist. Über eine Gurtschloßhöheneinstellung gemäß der EP-A-265 747 ist es mit der Sitzschiene einer Längsführung verbunden.

Die Querverbindung kann in einer Alternative auch elastisch, z.B. als Torsionsfeder ausgeführt sein, wodurch die Rückenlehne bei Belastung einfedern kann. Vorzugsweise wirkt dann der Verstellantrieb auf ein drehstarres Rohr, das bis zur Sitzmitte reicht und dort mit Torsionsfedern verbunden ist, die sich zu beiden Sitzseiten erstrecken und jeweils an ihrem anderen Ende mit einem Gelenkarm 30 bzw. 31 verbunden sind. Vorzugsweise sind die Drehwinkel der beiden von der Sitzmitte ausgehenden Torsionsfedern bei einem vorgegebenen Maximalwinkel begrenzt. Andere Ausführungen elastischer Elemente zwischen dem Verstellantrieb und dem Gelenkvieleck sind möglich.

Die für die Durchführung der Erfindung einzusetzenden Verstellantriebe sind selbsthemmend, sperren also im Kraftrückflußweg, oder haben eine Blockierung gegen selbstätiges Rückstellen.

Der Versatz zwischen Haltebereich 36 und Lagerteilgelenk ist so groß wie möglich gewählt, insbesondere beträgt er mindestens fünfzig, vorzugsweise mindestens achtzig Millimeter.

Es sind mehrere kinematische Umkehrmöglichkeiten zu den dargestellten bzw. beschriebenen Ausführungen möglich. So können beispielsweise die gezeigten zwei Ausführungsbeispiele spiegelbildlich nach oben geklappt werden, so daß die jeweiligen Gelenkvielecke im wesentlichen im Seitenteil der Rückenlehne 22 untergebracht sind. Weiterhin kann in kinematischer Umkehr die erste und/oder die zweite Kulisse so ausgebildet sein, daß sich die Kulissenführung im Lagerteil 24 bzw. einer Schwinge befindet, während das Kulissenteil 54 am Lagerteil 24 ausgebildet ist.

## Patentansprüche

1. Fahrzeugsitz mit einem Sitzteil, mit einer Rückenlehne (22), die an einem Sitzträger (20) des Sitzteils befestigt ist, und mit einer Vorrichtung zur Veränderung der nutzbaren Sitzfläche des Sitzteils, wobei zur Längsverschiebung der Rückenlehne (22) gegenüber dem Sitzteil an beiden Sitzseiten jeweils eine Verstellvorrichtung zwischen Sitzträger (20) und einem Lagerteil (24) der Rückenlehne (22) angeordnet ist, der ein Verstellantrieb zugeordnet ist,
**dadurch gekennzeichnet**, daß
der Lagerteil (24) der Rückenlehne (22) über ein Gelenkvieleck mit dem Sitzträger (20) verbunden ist, indem
a) zwischen dem Lagerteil (24) und dem Sitzträger (20) ein Gelenkarm (30) angeordnet ist, der einerseits am Lagerteil (24) in einem Lagerteilgelenk (28) und andererseits am Sitzträger (20) in einem Sitzträgergelenk (32) angelenkt ist, und daß eine Querverbindung (34) zwischen den beiden Sitzseiten zur Drehübertragung für jeweils eines dieser Gelenke (z.B. 32) des Gelenkarms (30) vorgesehen ist und dieser Querverbindung (34) der Verstellantrieb zugeordnet ist und
b) der Lagerteil (24) einen geführten Haltebereich (36) hat, der quer zur Rückenlehne (22) gegenüber dem Lagerteilgelenk (28) versetzt ist, und daß entweder der Haltebereich (36) über eine Kulisse geführt ist, die im Sitzträger (20) ihr Gegenstück hat, oder daß im Haltebereich (36) eine Schwinge (38) angelenkt ist, die an ihrem anderen Ende
i) am Sitzträger (20) angelenkt ist, ii) oder in einer zweiten Kulissenführung, deren Gegenstück am Sitzträger (20) ausgeführt ist, geführt ist, iii) oder angelenkt ist an einer Koppelschwinge, die ihrerseits mit dem Sitzträgergelenk (32) verbunden ist, und daß
c) der Verstellantrieb an nur einer Sitzseite angeordnet ist.

2. Fahrzeugsitz nach Anspruch 1, dadurch gekennzeichnet, daß der Sitzträger (20) über eine Höhenverstellvorrichtung mit einer Längsführung des Fahrzeugsitzes verbunden ist.

3. Fahrzeugsitz nach Anspruch 1 oder 2, dadurch gekennzeichnet, daß der verstellantrieb handbetätigt oder motorisch betätigt ist.

4. Fahrzeugsitz nach einem der Ansprüche 1 bis 3, dadurch gekennzeichnet, daß der Lagerteil (24) der Rückenlehne (22) über eine Neigungsverstellvorrichtung mit einem Hauptbereich der Rückenlehne (22) verbunden ist, deren Verstellachse parallel zur Achse (40 oder 42) der Querverbindung (34) läuft.

5. Fahrzeugsitz nach einem der Ansprüche 1 bis 4, dadurch gekennzeichnet, daß innerhalb des Verstellbereichs der Verstellvorrichtung das Lagerteilgelenk (28) entweder im wesentlichen oberhalb und vor (in Sitzrichtung gesehen) dem Sitzträgergelenk (32) liegt oder unterhalb und hinter (in Sitzrichtung gesehen) diesem Sitzträgergelenk (32) angeordnet ist.

6. Fahrzeugsitz nach einem der Ansprüche 1 bis 5, dadurch gekennzeichnet, daß an der fahrzeugmittigen Seite des Fahrzeugsitzes ein Steckschloß für einen sitzbefestigten Sicherheitsgurt an einem der Gelenk- oder Kulissenpunkte der Verstellvorrichtung und insbesondere am Sitzträger (20) befestigt ist.

7. Fahrzeugsitz nach einem der Ansprüche 1 bis 6, dadurch gekennzeichnet, daß die Querverbindung (34) starr ist oder daß die Querverbindung (34) als Torsionsstab ausgeführt ist.

8. Fahrzeugsitz nach Anspruch 7, dadurch gekennzeichnet, daß der Verstellantrieb auf ein starres Rohr wirkt, das bis zur Sitzmitte reicht und dort mit zwei Torsionsfedern verbunden ist, die von der Mitte jeweils zu einer Sitzseite wegstehen und die ihrerseits an den Sitzseiten an einem Teil des Gelenkvielecks, z. B. einem Gelenk des Gelenkarms 30, angreifen.

9. Fahrzeugsitz nach einem der Ansprüche 1 bis 8, dadurch gekennzeichnet, daß die erste oder zweite Kulisse gekrümmt verläuft.

## Claims

1. Vehicle seat with a seat portion, a backrest fixed to a seat carrier (20) of the seat portion and a device for adjusting the usable seat area of the seat portion, whereby for a longitudinal movement of the backrest (22) relative to the seat portion an adjustment device is provided at both sides of the seat in each case, which is arranged between the seat carrier (20) and a bearing member (24) of the backrest, a drive unit being provided for this adjustment device, characterised in that a multi-bar mechanism links the bearing member (24) of the backrest (22) to the seat carrier (20), whereby
a) an articulated arm (30), is arranged between the bearing member (24) and the seat carrier and is articulated on one hand to the bearing member (24) in a bearing member joint (28) and on the other hand to the seat carrier (20) in a seat carrier joint (32), and in that a cross connection (34) is arranged between the two sides of the seat for transfer of rotary movement of one of the joints (e.g. 32) of the articulated arm (30) and that the drive unit is attached to this cross connection, and
b) the bearing member (24) has a guided holding area (36), which is displaced transversely to the backrest (22) relative to the bearing member joint (28), and that either the holding area (36) is guided in a crank having a counter piece in the seat carrier (20) or a rocker (38) is articulated in the holding area, the free end thereof being linked to the seat carrier (20) or is guided in a second crank having a counterpart is formed at the seat carrier (20) or is articulated to a coupling rocker, which is linked to the seat carrier joint (32), and in that
c) the drive unit is located at one side of the seat only.

2. Vehicle seat according to claim 1, characterised in that an height adjustment device is arranged between the seat carrier (20) and a longitudinal adjustment device of the vehicle seat.

3. Vehicle seat according to claim 1 or 2, characterised in that the drive unit is either hand operated or driven by a motor.

4. Vehicle seat according to one of the claims 1 to 3, characterised in that an inclination adjustment device is arranged between the bearing member (24) of the backrest (22) and the main portion of the backrest (20), the adjustment axis thereof running parallel to the axis (40 or 42) of the cross connection (34).

5. Vehicle seat according to one of the claims 1 to 4, characterised in that within the area of adjustment of the adjustment device the bearing member joint (28) is either essentially above and in front of (seen in regular seating direction) the seat carrier joint (32) or below and behind (seen in regular seating direction) of this seat carrier joint (32).

6. Vehicle seat according to one of the claims 1 to 5, characterised in that a plug-in socket for a security belt fixed to the seat is arranged at the side of the vehicle seat facing the middle of the car and is fixed to one of the joint or crank points of the adjustment device and is especially fixed to the seat carrier (20).

7. Vehicle seat according to one of the claims 1 to 6, characterised in that the cross connection (34) is rigid and that the cross connection (34) is made as a torque rod.

8. Vehicle seat according to claim 7, characterised in that the adjustment device acts on a rigid tube extending towards the middle of the seat and is linked there to two torque springs extending from the middle towards one side of the seat in each case and which for their part act upon a part of the multi-bar mechanism, e.g. upon a joint of the articulated arm (30).

9. Vehicle seat according to one of the claims 1 to 8, characterised in that the first or the second crank follows a curved line.

## Revendications

1. Siège de véhicule avec un élément d'assise, avec un dossier (22) qui est fixé sur un support d'assise (20) de l'élément d'assise et avec un dispositif de modification de la surface d'assise utile de l'élément d'assise, un dispositif de réglage étant respectivement placé entre le support de l'assise (20) et un élément logement (24) du dossier (22) pour le réglage longitudinal du dossier (22) par rapport à l'élément d'assise sur les deux côtés du siège et auquel un entraînement de réglage est affecté,
caractérisé par le fait que
l'élément logement (24) du dossier (22) est relié au support de l'assise (20) par un polygone articulé en ce sens que
a) un bras articulé (30) est disposé entre l'élément logement (24) et le support d'assise (20), lequel bras est d'une part rattaché sur l'élément logement (24) dans une articulation d'élément logement (28) et, d'autre part, sur le support de l'assise (20) dans une articulation de support d'assise (32) et qu'un assemblage transversal (34) est prévu entre les deux côtés du siège pour le transfert rotatif pour respectivement une de ces articulations (p. ex. 32) du bras articulé (30) et que l'entraînement de réglage est affecté à cet assemblage transversal (34) et
b) que l'élément logement (24) a une zone de maintien guidée (36), laquelle est décalée perpendiculairement au dossier (32) par rapport à l'articulation de l'élément logement (28) et que soit la plage de maintien (36) est guidée par une coulisse qui possède son contre-élément dans le support de l'assise (20) ou que, dans la zone de maintien (36), une bielle oscillante (38) est rattachée, laquelle bielle est rattachée en son autre extrémité i) sur le support de l'assise (20), ii) ou guidée dans un deuxième guidage à coulisse dont le contre-élément est exécuté sur le support de l'assise (20), iii) ou rattachée sur une bielle d'accouplement qui est elle-même reliée à l'articulation du support de l'assise (32) et que
c) l'entraînement de réglage est uniquement disposé sur un côté du siège.

2. Siège de véhicule selon la revendication 1, caractérisé par le fait que
le support de l'assise (20) est relié par un dispositif de réglage de la hauteur à un guidage longitudinal du siège du véhicule.

3. Siège de véhicule selon la revendication 1 ou 2, caractérisé par le fait que
l'entraînement de réglage est actionné manuellement ou par moteur.

4. Siège de véhicule selon l'une des revendications 1 à 3, caractérisé par le fait que
l'élément logement (24) du dossier (22) est relié à une section principale du dossier (22) dont l'axe de réglage est parallèle à l'axe (40 ou 42) de l'assemblage transversal (34).

5. Siège de véhicule selon l'une des revendications 1 à 4, caractérisé par le fait que
à l'intérieur de la plage de réglage du dispositif de réglage, l'articulation de l'élément logement (28) se trouve essentiellement au-dessus et en avant (vu dans le sens de l'assise) de l'articulation du support de l'assise (32) ou en dessous et derrière (vu dans le sens de l'assise) cette articulation de support de l'assise (32).

6. Siège de véhicule selon l'une des revendications 1 à 5, caractérisé par le fait que
sur le côté centre du véhicule du siège du véhicule, un fermoir pour une ceinture de sécurité fixée au siège est fixé sur un des points de l'articulation ou de la coulisse du dispositif de réglage et notamment sur le support de l'assise (20).

7. Siège de véhicule selon l'une des revendications 1 à 6, caractérisé par le fait que
l'assemblage transversal (34) est rigide ou que l'assemblage transversal (34) consiste en une barre de torsion.

8. Siège de véhicule selon la revendication 7, caractérisé par le fait que
l'entraînement de réglage agit sur un tube rigide qui va jusqu'au centre du siège et qu'il est relié en cet endroit à deux ressorts de torsion qui s'écartent respectivement au centre d'un côté du siège et qui entrent en prise sur les côtés du siège sur un élément du polygone articulé, p. ex. une articulation du bras articulé 30.

9. Siège de véhicule selon l'une des revendications 1 à 8, caractérisé par le fait que
la première ou la deuxième coulisse présente une ligne coudée.
